# EUROPÄISCHE PATENTSCHRIFT

(11) **EP 1 555 251 B1**
(45) Veröffentlichungstag und Bekanntmachung des Hinweises auf die Patenterteilung: **06.10.2010**
(21) Anmeldenummer: 05405005.9
(22) Anmeldetag: 07.01.2005
(51) Int. Cl.: C04B 2/12, F27B 1/02

(54) **Verfahren zum Brennen von körnigem, mineralischem Brenngut**
Process for burning of particulate mineral solids
Procédé de cuisson de minéraux particulaires

(30) Priorität: 15.01.2004 DE 102004002043
(43) Veröffentlichungstag der Anmeldung: 20.07.2005
(73) Patentinhaber: Maerz-Ofenbau AG, 8027 Zürich (CH)
(72) Erfinder: Piringer, Hannes, 5712 Beinwil am See (CH)
(74) Vertreter: Quehl, Horst Max

(56) Entgegenhaltungen:
- AT-B- 377 078
- AT-B- 390 248
- DE-A1- 3 204 315
- LU-A1- 64 910
- US-A- 3 204 936
- H.PIRINGER: "Brenngase mit geringem Heizwert für die Beheizung von gleichstrom Regenerativ-Kalkschachtöfen" ZKG INTERNATIONAL, Bd. 56, Nr. 6, 2003, Seiten 66-72, XP002502283

## Beschreibung

Die Erfindung betrifft ein Verfahren zum Brennen von körnigem, mineralischen Brenngut, insbesondere von Kalkstein oder Dolomit entsprechend den Merkmalen des Oberbergriffs des Patentanspruchs 1.

Schachtöfen, die auf die genannte Art betrieben werden, sind als MAERZ-Öfen in der Literatur vielfach beschrieben und zeichnen sich gegenüber Schachtöfen anderer Art durch eine besonders hohe Wirtschaftlichkeit aus, die durch ein Brennen im Gleichstrom mit dem Brenngut im Brennschacht und eine Ableitung der heißen Abgase im parallelen Abgasschacht im Gegenstrom und dabei periodischem Wechsel der Betriebsweisen zwischen beiden Schächten begründet ist. Aufgrund des Strömungswiderstandes in den vom körnigen Brenngut gefüllten Ofenschächten müssen die Verbrennungsluft und die Kühlluft mit erheblichem Überdruck zugeführt werden, so dass die Schachträume unter Überdruck stehen, der beispielsweise 40 kPa (400 mbar) beträgt. Dieser Überdruck bildet ein Hindernis, die Schächte während des Brennbetriebs zur Atmosphäre hin zu öffnen, um neues körniges Brennmaterial zuzuführen, so dass hierzu üblicherweise der drucklose Zustand während der Umschaltphase ausgenutzt wird. Durch die dabei erfolgende Unterbrechung des Brennbetriebs ergibt sich eine erhebliche Verringerung der effektiven Betriebszeit des Ofens.

Durch die AT 377078 oder die US 4708643 (EP 0207048) wurde deshalb vorgeschlagen für die Zufuhr von neuem, körnigem Brennmaterial Druckschleusen vorzusehen, so dass dies während des Brennbetriebs erfolgen kann. In einem Artikel von H.PIRINGER in ZKG INTERNATIONAL, Bd.56, Nr.6, 2003, Seiten 66-72 (XP-002502283) wird außerdem darauf hingewiesen, dass die Zufuhr von Brennmaterial (Kalkstein) während der Brennzeit zweimal erfolgen kann, um Schwankungen der Abgastemperatur so gering wie möglich zu halten.

Druckschleusen haben jedoch den Nachteil, dass sie einen zusätzlichen räumlichen und technischen Aufwand erfordern und durch sie Maßnahmen zur genauen Dosierung des Brenngutes und zur gleichmäßigen Beaufschlagung der Ofenschächte konstruktiv erschwert oder verhindert werden. Außerdem bereitet es Schwierigkeiten bei der Durchschleusung von Brennmaterial einen Austritt von Abgas in die Atmosphäre zu verhindern.

Der Erfindung liegt die Aufgabe zugrunde, ein Verfahren der genannten Art zu finden, das es auch mit geringem konstruktivem Aufwand bei der Nachrüstung von bestehenden Ofenanlagen ermöglicht, neues körniges Brennmaterial während des Brennbetriebs zuzuführen, so dass die Abgastemperatur der Ofenanlage besser gesteuert werden kann und konstruktive Maßnahmen zur gleichmäßigeren Zufuhr und Verteilung neuen Brenngutes erleichtert werden.

Die Lösung der genannten Aufgabe erfolgt erfindungsgemäß aufgrund der kennzeichnenden Merkmale des Patentanspruchs 1.

Vorteilhafte Ausführungsformen des erfindungsgemäßen Verfahrens sind Gegenstand der abhängigen Patentansprüche und der folgenden Beschreibung an Hand der Zeichnungen zu entnehmen. Es zeigt:

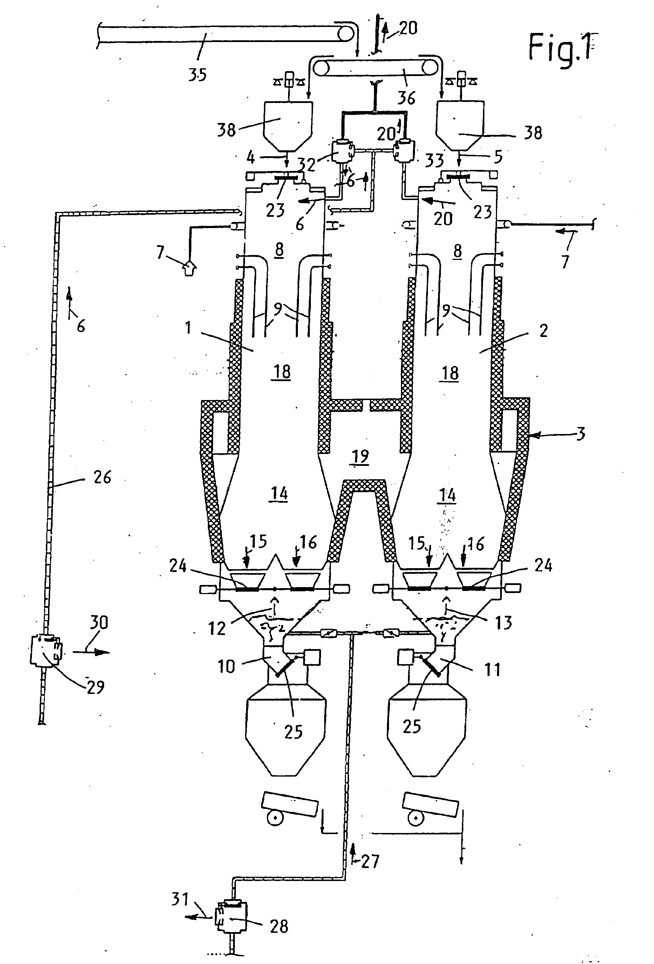

Fig.1 eine schematische Schnittdarstellung einer Ofenanlage mit zwei Ofenschächten,
Fig.2 eine schematische Darstellung des oberen Bereichs der Ofenanlage nach Fig. 1 mit einer Filteranlage zur Abgasreinigung,
Fig. 3 ein Zeit-Temperaturdiagramm für das zur Filteranlage strömende Abgas und
Fig.4 eine schematische Schnittdarstellung des oberen Bereiches eines Ofenschachtes mit einer Filteranlage.

Wie an sich bekannt, wird den beiden Schächten 1 und 2 des Ofens 3 ein körniges Brenngut mit einer Korngröße z.B. im Bereich von 40 bis 80 mm chargenweise zugegeben, wie durch die Pfeile 4 und 5 angedeutet ist. Die Zufuhr von Verbrennungsluft, ebenfalls von oben, entsprechend den Pfeilen 6 und von Brennstoff entsprechend dem Pfeil 7 über in der Vorwärmzone 8 vertikal angeordnete Brennlanzen 9, erfolgt periodisch wechselnd zu einem der Schächte 1 oder 2. Außerdem wird vom unteren Austragsbereich 10,11 beider Schächte 1,2 kontinuierlich entsprechend den Pfeilen 12,13 Kühlluft zugeführt, so dass das gebrannte Produkt nach Passieren der Kühlzone 14 gekühlt in Richtung der Pfeile 15,16 mittels einer gesteuerten Austragsvorrichtung 24 kontinuierlich abgeführt werden kann.

Die Aufheizung des körnigen Brenngutes für die Vorwärmzone 8 des Brennschachtes 1 erfolgt jeweils im benachbarten Abgasschacht 2, indem die Brenngase nach Passieren der Brennzone 18 über einen Verbindungskanal 19 als Abgas in den Abgasschacht überströmen und anschliessend nach oben entsprechend den Pfeilen 20 verlassen. Entsprechend dieser durch die Pfeile 6 und 20 dargestellten Strömungsrichtungen bildet somit der Schacht 1 den Brennschacht und der Schacht 2 den Abgasschacht.

Die vom Verbindungskanal 19 aus mit einer Temperatur von z.B. 1000° C nach oben strömenden Abgase aus der Brennzone 18 des Brennschachtes 1 erwärmen beim Durchströmen des Abgasschachtes 2 das in diesem eingefüllte körnige, mineralische Material und werden dabei abgekühlt, so dass sie mit z.B. 100° C zu einer ausserhalb der Schächte 1,2 angeordneten Saugfilteranlage 21 mittels eines Gebläses 22 in Richtung zu dem Kamin 23 abgesaugt werden können.

Nach einer bestimmten Brennzeit wird das Brennmaterial im Abgasschacht 2 aber so weit erwärmt, dass es das Abgas wesentlich weniger kühlt und die nachgeschaltete Filteranlage zunehmend thermisch belastet wird. Ausserdem nimmt dann der Wärmeverlust der Ofenanlage 3 zu. Entsprechend dem Stand der Technik mit Zufuhr neuen Brennmaterials nur während der periodischen Umschaltung muss der Brennbetrieb dann im Brennschacht 1 nach beispielsweise 12 Minuten abgebrochen werden, um zu dem anderen Schacht 2 umgeschaltet zu werden.

Die Umschaltung der Betriebsart, d.h. zwischen Brennbetrieb im Brennschacht 1 und Wärmeregeneration im Abgasschacht 2 erfolgt mit Druckentspannung der Ofenschächte 1,2 und Wechsel der Strömungsrichtungen von Brennstoff, Verbrennungsluft und Abgas durch Öffnen und Schliessen mehrerer hydraulisch betätigter Ventilklappen sowie mit Öffnen und Schliessen des oberen Schachtverschlusses 23 und der unteren Schachtklappen 25, um neues Brenngut zuzuführen und gebranntes Produkt abzuführen.

Für die Druckentspannung sind in den kopfseitig und bodenseitig zum jeweiligen Schacht 1,2 einmündenden Zuleitungen 26 und 27 für Verbrennungsluft und von Kühlluft Ventile 28,29 vorgesehen, die während der Umschaltung der Betriebsweise zwischen den Schächten 1,2 ein Abblasen der Luft in Richtung der Pfeile 30,31 ermöglichen. Ausserdem werden zur Druckentspannung die oberhalb der Schächte 1,2 vorgesehenen Umsteuerventile 32,33 für die wahlweise Öffnung der Verbrennungsluftzuleitung in Richtung der Pfeile 6 und die Öffnung der Abgasableitung in Richtung der Pfeile 20 zur Abgasfilteranlage 21 und damit zur Atmosphäre hin geöffnet. Der Zeitaufwand für eine solche Umschaltung beträgt entsprechend dem Stand der Technik ca. eine Minute pro 12-minütigem Brennzyklus und somit zwei Stunden pro Tag.

Um den oberen Schachtverschluss 23 des Abgasschachtes 2 auch bei Überdruck in den Schächten 1,2 öffnen zu können, erfolgt erfindungsgemäss die Ableitung der Abgase mittels eines Sauggebläses 22, dessen Saugleistung vor dem Oeffnen des Schachtverschlusses 23 und bis zum Schliessen nach Abschluss der Brenngutzufuhr so weit erhöht werden kann, dass der Überdruck im Bereich des Schachtverschlusses 23 sich bis auf Null reduziert und folglich ein Abströmen des unter Überdruck stehenden Abgas über die Füllöffnung 37 zum Füllbehälter 38 und durch diesen hindurch verhindert wird.

Aufgrund der Erfindung ist es folglich möglich, neues körniges Brenngut unabhängig von der beschriebenen Umschaltung der Betriebsart des jeweiligen Schachtes 1,2 und damit unabhängig von deren Druckentspannung und somit während der Brennzyklen zuzuführen, so dass die Unterbrechung des Brennbetriebs für die erforderliche Umschaltung zwischen den Schächten 1,2 jeweils auf ca. 25 Sekunden reduziert werden kann. Dadurch kann die Brennzeit der Ofenanlage 3 von bisher nur 22 Stunden auf ca. 23,5 Stunden pro Tag verlängert werden und es sind längere Brennperioden von z.B. 16 Minuten anstatt bisher z.B. 12 Minuten möglich.

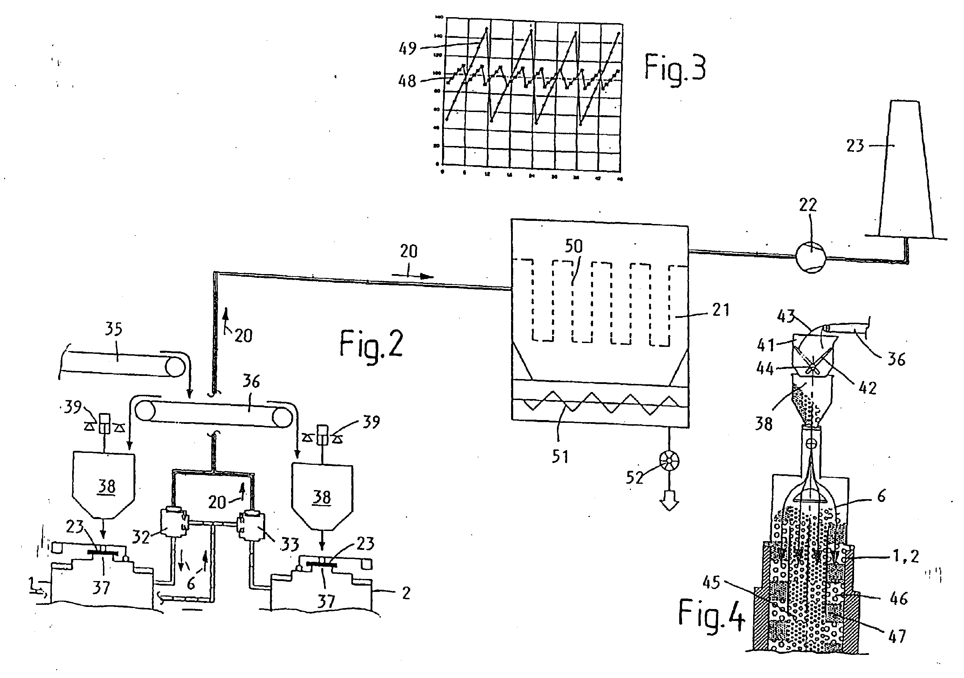

In bevorzugter Ausführungsform der Erfindung erfolgt die Zufuhr von körnigem Brenngut während des Brennbetriebs mehrmals und z.B. dreimal während eines Brennzyklus und im Abstand von z.B. vier Minuten. Dies hat den Vorteil, dass öfters aufgegebenes neues und entsprechend kühles Brenngut vorzeitig einen weiteren Temperaturanstieg des aus dem Abgasschacht 2 abströmenden Abgases verhindert, so dass sich erheblich niedrigere maximale Abgastemperaturen ergeben. Andererseits ergibt sich auch der Vorteil, dass durch entsprechend kleinere, öfters zugeführte Mengen an jeweils neuem Brenngut die minimalen Abgastemperaturen wesentlich erhöht werden können, so dass ein Erreichen des für die Filteranlage schädlichen Taupunktes der Abgase verhindert wird. Die entsprechend flacheren Temperatur-Zeitkurven 48 aufgrund des erfindungsgemässen Verfahrens sind in Fig.3 im Vergleich mit einer Temperatur-Zeitkurve 49 dargestellt, die dem Füllen mit 12-minütigem Zeitabstand, d.h. während der Umschaltung zwischen den Ofenschächten entspricht.

Aufgrund der Erfindung kann auch ein durch den genannten Stand der Technik an sich bekanntes, technisch aufwändiges Schleusensystem für die Brenngutzufuhr vermieden werden und stattdessen ein einfaches, aus Förderbändern 35,36 und zwei auf die jeweilige Füllöffnung 37 absenkbaren Füllbehältern 38 bestehendes Füllsystem verwendet werden. Ausserdem ermöglicht das zur Atmosphäre hin offene Füllsystem auf konstruktiv einfache Weise eine genaue Dosierung der jeweiligen Füllmengen, indem die absenkbaren Füllbehälter 38 mit einer Wiegeeinrichtung 39 kombiniert werden. Weiterhin kann ein solches Füllsystem auf verhältnismässig einfache Weise mit einer Einrichtung kombiniert werden, durch die sich eine gleichmässigere Verteilung der unterschiedlichen Korngrössen und damit eine gleichmässigere Gasdurchströmung durch die Schüttgutsäule in den Ofenschächten 1,2 ergibt.

Für im Querschnitt kreisförmige Ofenschächte 1,2 ist eine solche Einrichtung zur gleichmässigen Kornverteilung beispielsweise durch einen als Drehkübel ausgeführten Füllbehälter 38 realisiert, der während seiner Befüllung durch das Förderband 36 eine Drehbewegung um seine vertikale Achse ausführt.

Eine für längliche und beispielsweise rechteckförmige Schachtquerschnitte ausgeführte Einrichtung zur Ausbildung einer gleichmässigen Kornverteilung in den Ofenschächten 1,2 besteht entsprechend der Darstellung in Fig.4 aus einer nach unten offenen Umlenkkammer 41, in der eine Umlenkplatte 42 schwenkbar gelagert ist. Diese ist in der Wurfbahn 43 angeordnet, mit der die Körner des körnigen Materialgemischs die Fördereinrichtung 36 verlassen. Die Umlenkplatte 42 lässt sich um eine horizontale Achse 44 in einander entgegengesetzte Neigungsrichtungen schwenken, so dass die Richtung, mit der die Korngrössen des Materialgemischs sich in dem Füllbehälter 38 quer zur vertikalen Behälterachse verändern, durch Schwenken der Platte 42 umgekehrt wird. Das Wechseln der Schwenkrichtung der Umlenkplatte 42 erfolgt periodisch in vorzugsweise gleichen Zeitabständen und beispielsweise nach jedem periodischen Entleeren des Füllbehälters 38, so dass sich in der Schüttgutsäule 45 der Schächte 1,2 aufeinanderfolgende Schichten 46,47 mit quer zur Schachtrichtung entgegengesetzter Charakteristik der Kornverteilung ergeben. Folglich kann die Verbrennungsluft bei der Durchströmung der Schüttgutsäule in den Schächten 1,2 nicht mehr einseitig bevorzugte Bahnen nehmen, sondern erhält eine gleichmässige Verteilung.

Diese Massnahme ermöglicht es auch längliche oder rechteckförmige Querschnitte der Schächte 1,2 in grösserer Bauweise und damit für grössere Materialdurchsätze zu verwirklichen. Solche Schächte 1,2 sind einfacher als Bauwerk zu errichten. Ausserdem kann die erforderliche Querverbindung 19 zwischen den Schächten 1,2, im Vergleich zu einer Querverbindung zwischen Rundschächten erheblich einfacher gestaltet werden.

Die Ausführung der Erfindung an einer bereits bestehenden Ofenanlage erfordert neben der Umprogrammierung der Steueranlage für die Betätigung von Ventilen für Brennstoff und Luft sowie der Ofenverschlüsse auch den Ersatz des Sauggebläses 22 durch ein regelbares Sauggebläse grösserer Leistung, um die Saugleistung kurzzeitig auf die erforderliche Grösse erhöhen zu können. Eine geeignete, zum Saugbetrieb geeignete Filteranlage 21 hat beispielsweise eine Reihe von Filtersäcken 50, von denen die abgeschiedenen Staubteile zu einer bodenseitigen Förderschnecke 51 abfallen, die sie zu einer Zellenschleuse 52 weiter fördert.

## Patentansprüche

1. Verfahren zum Brennen von körnigem, mineralischen Brenngut, insbesondere von Kalkstein oder Dolomit, in einem Schachtofen (3), der mindestens zwei durch einen Überströmkanal(19) miteinander verbundene Schächte (1,2) aufweist, die durch periodische Umsteuerung von Brennstoff und Verbrennungsluft zu jeweils einem der Schächte (1,2) abwechselnd einen Brennschacht (1)und einen Abgasschacht (2) bilden, mit räumlich voneinander distanzierter, kopfseitiger Zufuhr des körnigen Brenngutes und von Verbrennungsluft periodisch wechselnd zu jeweils einem der Schächte (1,2) und Abfuhr von fertig gebranntem Material an den unteren Schachtenden, wobei Abgase aus dem Brennschacht durch den Überströmkanal (19)in den Abgasschacht (2) geleitet werden, in dem sie nach Durchströmen einer oberen Vorwärmzone (8) kopfseitig und gekühlt abströmen und über eine äussere Filteranlage (21) abgesaugt werden, wobei eine weitere Luftzufuhr vom unteren Ende der Schächte (1,2) aus erfolgt, um das aus der Brennzone (18)absinkende Brenngut in einer unteren Kühlzone (14) zu kühlen und wobei für die periodische Zufuhr des körnigen Brenngutes während des Brennbetriebs zu dem jeweiligen Abgasschacht (2) zwischen diesem und einem zur Atmosphäre hin offenen Füllbehälter (38) periodisch eine Verbindung hergestellt wird, **dadurch gekennzeichnet, dass** während dieser Brenngutzufuhr die Abgase mit erhöhter Leistung abgesaugt werden, so dass sich der Druck im Bereich der Füllöffnung (37) des Schachtes (1,2) auf Atmosphärendruck reduziert und somit ein Abströmen des Abgases über die Füllöffnung (37) verhindert wird.

2. Verfahren nach Anspruch 1, **dadurch gekennzeichnet, dass** eine maximale Temperatur des Abgases beim Verlassen des Abgasschachtes (2) durch mehrmalige Zufuhr des körnigen Brenngutes während einer Brennperiode des Brennschachtes (1) begrenzt wird und die jeweilige Brennperiode bis zum Erreichen eines maximalen Wertes der Abgastemperatur ausgedehnt wird.

3. Verfahren nach Anspruch 1 oder 2, **dadurch gekennzeichnet, dass** zur Erzielung einer gleichmäßigen Kornverteilung in einem im Querschnitt kreisförmigen Schacht (1,2) die periodische Zufuhr von Brenngut über einen um eine vertikale Achse drehbaren Füllbehälter (38) erfolgt, der während seiner Befüllung kontinuierlich gedreht wird.

4. Verfahren nach Anspruch 1 oder 2, **dadurch gekennzeichnet, dass** bei einer im Querschnitt länglichen oder rechteckförmigen Ausführung der Ofenschächte (1,2) eine beim Füllen des Füllbehälters (38) erfolgende Entmischung mit in einer Richtung zunehmender Stückgröße des körnigen Brenngutes durch periodisches Ändern der Füllrichtung in ihrer Richtung gewechselt wird, so dass die gerichtete Stückgrößenverteilung in der sich im Ofenschacht (1,2) ausbildenden Schüttgutsäule schichtweise wechselt.

5. Verfahren nach Anspruch 1,3 oder 4, **dadurch gekennzeichnet, dass** die jeweilige, in den Füllbehälter (38) einzufüllende Füllmenge durch Wiegen des Füllbehälters (38) gesteuert wird, indem dieser mit einer Wiegeeinrichtung (39) verbunden ist.

6. Verfahren nach Anspruch 4, **dadurch gekennzeichnet, dass** das Ändern der Richtung zunehmender Stückgröße mittels einer Rutsche (42) erfolgt, deren Förderrichtung durch Schwenken periodisch in eine entgegengesetzte Richtung gewechselt wird.

7. Verfahren nach Anspruch 6, **dadurch gekennzeichnet, dass** die Förderrichtung der Rutsche (42) nach jeder chargenweisen Entleerung eines der Füllbehälter (38) oder nach mehreren chargenweisen Entleerungen desselben umgekehrt wird, so dass das Volumen der Schichten der Schüttgutsäule im Ofenschacht (1,2) mit einander entgegengesetzt gerichteter Entmischungsverteilung dem Volumen einer oder mehrerer Chargen entspricht.

8. Verfahren nach Anspruch 4, **dadurch gekennzeichnet, dass** die beiden wechselnden Füllrichtungen der Rutsche (42) parallel zur Längsrichtung des Schachtquerschnittes des Schachtes (1,2) ausgerichtet sind.

## Claims

1. A method for burning a granular, mineral charge, especially limestone or dolomite, in a shaft furnace (3) which has at least two shafts (1, 2) interconnected by an overflow channel (19), which by periodically changing over fuel and combustion air to respectively one of the shafts (1, 2) alternately forms a burning shaft (1) and an exhaust gas shaft (2), with head-side feed of granular material for burning and combustion air, spatially separated from one another and periodically alternating to respectively one of the shafts (1, 2) and removal of burnt material at the lower ends of the shafts, wherein exhaust gases are led from the burning shaft through the overflow channel (19) into the exhaust gas shaft (2) in which, after flowing through an upper pre-heating zone (8), they flow off on the head side and cooled and are sucked away by means of an external filter plant (21), wherein a further air feed takes place from the lower end of the shafts (1, 2) in order to cool the material for burning sinking from the burning zone (18) in a lower cooling zone (14) and wherein for the periodic feed of the granular material for burning during the burning operation to the respective exhaust gas shaft (2) a connection is periodically made between said shaft and a filling container (38) open to the atmosphere, **characterised in that** during this supply of material for burning the exhaust gases are sucked off with increased power so that the pressure in the area of the filling opening (37) of the shaft (1, 2) at overpressure is reduced to atmospheric pressure and thus the exhaust gas is prevented from flowing off via the filling opening (37).

2. The method according to claim 1, **characterised in that** a maximum temperature of the exhaust gas on leaving the exhaust gas shaft (2) is limited by repeated supply of granular material for burning during a burning period of the burning shaft (1) and the maximum burning period until a maximum value of the exhaust gas temperature is reached, is extended.

3. The method according to claim 1 or claim 2, **characterised in that** in order to achieve a uniform grain distribution in a circular-cross section shaft (1, 2) material for burning is supplied periodically via a filling container (38) rotatable about a vertical axis, which is turned continuously during its filling.

4. The method according to claim 1 or claim 2, **characterised in that** in the case of an oblong or rectangular cross-section design of the furnace shafts (1, 2), a separation which takes place during filling of the filling container (38) with the lump size of the granular material for burning increasing in one direction is changed in direction by periodically changing the filling direction so that the directional lump size distribution changes in layers in the column of loose material forming in the furnace shaft (1, 2).

5. The method according to claim 1, 3 or 5 **characterised in that** the respective filling quantity to be poured into the filling container (38) is controlled by weighing the filling container (38) by connecting said container to a weighing device (39).

6. The method according to claim 4, **characterised in that** the direction of increasing lump size is changed by means of a chute (42) whose feed direction is changed by pivoting periodically into an opposite direction.

7. The method according to claim 6, **characterised in that** the feed direction of the chute (42) is reversed after batch-wise emptying of one of the filling containers (38) or after repeated batch-wise emptying of the same so that the volume of the layers of the loose-material column in the furnace shaft (1,2) with a separation distribution oppositely directed to one another corresponds to the volume of one or a plurality of batches.

8. The method according to claim 4, **characterised in that** the two varying directions of filling of the chute (42) are aligned parallel to the longitudinal direction of the shaft cross-section of the shaft (1, 2).

## Revendications

1. Procédé pour la cuisson de matière granuleuse et minérale, en particulier de pierre à chaux ou de dolomite, dans un four à cheminée (3) qui présente au moins deux cheminées (1, 2) qui sont reliées entre elles par un canal de trop-plein (19) et qui forment en alternance une cheminée de cuisson (1) et une cheminée de gaz d'échappement (2) par le changement périodique de commande entre la substance combustible et l'air de cuisson, avec un apport à distance locale l'un de l'autre et du côté de la tête de la matière combustible granuleuse et de l'air de cuisson selon une alternance périodique vers respectivement une des cheminées (1, 2) et une évacuation du matériau à calcination achevée sur les extrémités inférieures de la cheminée, dans lequel les gaz d'échappement en provenance de la cheminée de cuisson par le canal de trop-plein (19) sont conduits dans la cheminée des gaz d'échappement (2) dans laquelle ils s'écoulent après le passage à travers une zone de préchauffage supérieure (8) du côté de la tête et en étant refroidis et dans laquelle ils sont aspirés par l'intermédiaire d'une installation de filtrage extérieure (21), dans lequel un autre apport d'air a lieu depuis l'extrémité inférieure des cheminées (1, 2) afin de refroidir la matière combustible qui s'abaisse depuis la zone de cuisson (18) dans une zone de refroidissement inférieure (14) et dans lequel, pour l'apport périodique de la matière combustible granuleuse pendant l'opération de cuisson vers la cheminée respective des gaz d'échappement (2) entre celle-ci et un réservoir de remplissage ouvert vers l'atmosphère (38), une liaison est établie périodiquement, **caractérisé en ce que**, pendant cet apport de matière combustible, les gaz d'échappement sont aspirés avec une plus haute puissance de telle sorte que la pression dans la zone de l'ouverture de remplissage (37) de la cheminée (1, 2) se réduit à la pression atmosphérique et que de ce fait, un écoulement des gaz d'échappement par l'ouverture de remplissage (37) est empêché.

2. Procédé selon la revendication 1, **caractérisé en ce qu'**une température maximale des gaz d'échappement est limitée pendant la sortie de la cheminée des gaz d'échappement (2) par plusieurs apports de la matière combustible granuleuse pendant une période de cuisson de la cheminée de cuisson (1) et **en ce que** la période de cuisson respective est élargie jusqu'à l'obtention d'une valeur maximale de la température des gaz d'échappement.

3. Procédé selon l'une ou l'autre des revendications 1 et 2, **caractérisé en ce que**, pour obtenir une répartition régulière des grains dans une cheminée de section transversale circulaire (1, 2), l'apport périodique de matière combustible a lieu par l'intermédiaire d'un réservoir de remplissage (38) qui peut tourner autour d'un axe vertical et qui est tourné continuellement pendant son remplissage.

4. Procédé selon l'une ou l'autre des revendications 1 et 2, **caractérisé en ce que**, lors d'une réalisation allongée ou rectangulaire dans la section transversale des cheminées de four (1, 2), une dissociation qui a lieu pendant le remplissage du réservoir de remplissage (38) avec une dimension granulométrique croissante dans une direction de la matière combustible granuleuse est changée par la modification périodique de la direction de remplissage dans sa direction, de telle sorte que la répartition granulométrique orientée dans la colonne de matière en vrac qui se forme dans la cheminée de four (1, 2) alterne couche par couche.

5. Procédé selon la revendication 1, 3 ou 4, **caractérisé en ce que** la quantité de remplissage respective qui doit être remplie dans le réservoir de remplissage (38) est commandée par le pesage du réservoir de remplissages (38) **en ce que** celui-ci est relié à un dispositif de pesage (39).

6. Procédé selon la revendication 5, **caractérisé en ce que** la modification de la direction de la dimension granulométrique croissante a lieu au moyen d'une goulotte (42) dont le sens de convoyage est changé périodiquement par le basculement dans une direction opposée.

7. Procédé selon la revendication 6, **caractérisé en ce que** le sens de convoyage de la goulotte (42) est inversé après chaque vidage charge par charge d'un des réservoirs de remplissage (38) ou après plusieurs vidages charge par charge de celui-ci de telle sorte que le volume des couches de la colonne de matière en vrac dans la cheminée de four (1, 2) avec une répartition de dissociation dirigée à l'opposé les unes par rapport aux autres correspond au volume d'une charge ou de plusieurs charges.

8. Procédé selon la revendication 4, **caractérisé en ce que** les deux directions de remplissage alternantes de la goulotte (42) sont orientées parallèlement à la direction longitudinale de la section transversale de cheminée de la cheminée (1, 2).
